# EUROPÄISCHE PATENTSCHRIFT

(11) **EP 2 229 327 B1**
(45) Veröffentlichungstag und Bekanntmachung des Hinweises auf die Patenterteilung: **31.10.2012**
(21) Anmeldenummer: 09701029.2
(22) Anmeldetag: 09.01.2009
(51) Int. Cl.: B65G 1/14, A01F 25/00

(54) **VERFAHREN ZUM STAPELN VON BALLENFÖRMIGEN BEHÄLTNISSEN**
METHOD FOR STACKING BALE-SHAPED RECEPTACLES
PROCÉDÉ D'EMPILAGE DE CONTENANTS EN FORME DE BALLES

(30) Priorität: 10.01.2008 AT 392008
(43) Veröffentlichungstag der Anmeldung: 22.09.2010
(73) Patentinhaber: UV&P Umweltmanagement-Verfahrenstechnik Neubacher & Partner GESMBH, 1020 Wien (AT)
(72) Erfinder: DANZINGER, Georg, A-1020 Wien (AT); GRESSLEHNER, Gerhard, A-4060 Leonding (AT); HUBER-MEDEK, Katharina, A-1010 Wien (AT); NEUBACHER, Franz, A-2000 Stockerau (AT); WIMMER, Johann, A-4563 Micheldorf (AT)
(74) Vertreter: Babeluk, Michael
(86) Internationale Anmeldenummer: PCT/EP2009/050238
(87) Internationale Veröffentlichungsnummer: WO 2009/087231

(56) Entgegenhaltungen:
- WO-A-92/06012
- DE-U1- 20 303 731
- US-A- 2 061 937
- US-A- 4 781 271
- US-A- 5 197 236

## Beschreibung

Die Erfindung betrifft ein Verfahren zum Stapeln von ballenförmigen Behältnissen in mindestens zwei übereinander geschichteten Lagen, wobei die unterste Lage eine im Wesentlichen polygonale Fläche bedeckt (siehe z.B. US-A-5 197 236)

Abfallbeseitigung besteht gegenwärtig weltweit - insbesondere in den sogenannten Reformstaaten, in Schwellenländern und Entwicklungsländern - am häufigsten in der Ablagerung der Abfälle auf ungeordneten Deponien, mit erheblichen Konsequenzen wie Umweltverschmutzung und Vergeudung von Ressourcen, die potentiell einer ökologischen und ökonomisch sinnvollen Abfallverwertung zugänglich wären. Fallweise oder ständig auftretende Deponiebrände verursachen enorme Schadstoffemissionen mit hohem Potential der Schädigung der menschlichen Gesundheit und der Umwelt, wobei diffuse Schadstoffemissionen flüchtiger Verbindungen und Schadstoffverfrachtungen von Abfalllagerungen auch ohne Verbrennungsvorgänge in praktisch allen Umweltmedien (Luft, Wasser, Boden, aber auch in Fauna und Flora) auftreten können.

Eine zukunftsweisende Abfallbewirtschaftung erfordert ein stoffspezifisches Management bezogen auf unterschiedliche Materialgruppen einschließlich der notwendigen Zwischenlagerung von Abfällen zwecks Überbrückung des Zeitraums bis zur Inbetriebnahme neuer Anlagen oder zwecks Überbrückung temporärer Engpässe an verfügbaren Behandlungsanlagenkapazitäten.

Es ist bekannt, heizwertreiche Abfälle in verdichteter Form, nämlich in Form von folienumwickelten Ballen zu lagern. Es wird dabei eine ähnliche Technologie wie in der Landwirtschaft benutzt, in der Futtermittel in Form von folienumwickelten Ballen, sogenannten Silage-Ballen, gelagert werden.

Generell haben diese Ballen in der Regel eine im Wesentlichen zylindrische Form mit abgerundeten Kanten, wobei die Höhe des Zylinders etwa dem Durchmesser entspricht. Da die Lagerfläche in der Regel knapp und wertvoll ist, werden die ballenförmigen Körper zumeist in mehreren Lagen übereinander gestapelt, wodurch sich pyramidenförmige oder pyramidenstumpfförmige Strukturen ergeben.

Auf diese Weise ist es möglich, die Gefahr von Abfall- bzw. Deponiebränden weitestgehend zu verhindert und eine vergleichsweise umweltverträgliche geordnete Deponie bzw. geordnetes Zwischenlager zu schaffen.

Problematisch ist jedoch, dass bei einer bestimmten Größe und vor allem Höhe (mehr als vier Meter) der Struktur die mechanische Stabilität kritisch wird. Grundsätzlich ist zwar das Gebilde aus übereinandergestapelten Ballen in sich stabil, im Fall von Unfällen kann es jedoch dazu kommen, dass die Struktur zumindest teilweise zusammenbricht, so dass tonnenschwere Ballen aus relativ großer Höhe herabstürzen und große Schäden an Material und Menschen verursachen können. Im Sinne der Erhöhnung der Betriebssicherheit ist es daher wünschenswert, ein Verfahren zu schaffen, mit dem die Stabilität der Strukturen erhöht werden kann, so dass Betriebssicherheit auch im Fall von unvermeidbaren Unfällen gewährleistet werden kann. Eine weitere Aufgabe der Erfindung ist es, eine Anordnung von ballenförmigen Körpern und Sperrkörper für die Herstellung einer solchen Anordnung anzugeben, mit denen die Sicherheit erhöht werden kann.

Erfindungsgemäß werden diese Aufgaben durch ein Verfahren gelöst, bei dem an mindestens einer Ecke der untersten Lage ein Sperrkörper aus einem festen Material angeordnet wird, der im Wesentlichen die gleichen Abmessungen aufweist wie die einzelnen Behältnisse.

Es hat sich herausgestellt, dass der kritischste Teil der pyramidenförmigen Struktur die Ballen in den Ecken der untersten Lage sind. Wenn einer solcher Ballen beispielsweise durch ein Transportfahrzeug beschädigt oder verrückt wird, kann es zu einer Destabilisierung der gesamten Struktur mit dem entsprechenden Gefährdungspotential kommen. Es hat sich herausgestellt, dass es durch das Vorsehen spezieller Sperrkörper an den exponierten unteren Ecken des Stapels auch bei zu erwartenden Unfällen wesentlich zu verringern.

Wichtig im Rahmen der Erfindung ist es, dass der Sperrkörper im Wesentlichen die gleichen Abmessungen aufweist, wie die einzelnen Behältnisse. Dies bedeutet, dass die Hauptabmessungen, wie Breite, Durchmesser der Sperrkörper denen der Behältnisse entsprechen, so dass beide im Verbund problemlos gemeinsam stapelbar sind. Die geometrische Form der Sperrkörper kann jedoch etwas abweichend gestaltet sein, beispielsweise durch eine abgeplattete Bodenfläche, um das Wegrollen wirksam zu verhindern. Auf diese Weise bleibt die Form der Gesamtstruktur im Wesentlichen erhalten, das heisst, dass die Sperrkörper ähnlich wie Ballen gesetzt und verwendet werden können.

Eine besonders begünstigte Ausführungsvariante des erfindungsgemäßen Verfahrens sieht vor, dass die unterste Lage rechteckig ausgelegt wird und dass an allen vier Ecken ein Sperrkörper angeordnet wird. Auf diese Weise wird einerseits der verfügbare Platz bestmöglich ausgenutzt und andererseits kann eine besonders stabile Struktur erreicht werden.

Besonders vorteilhaft ist es, wenn auf jeweils vier Ballen einer Lage mittig ein Ballen einer weiteren Lage gelegt wird. Auf diese Weise wird eine im Wesentlichen pyramidenförmige Struktur hergestellt, die sich als besonders stabil herausgestellt hat.

Die Erfindung betrifft weiters eine Anordnung von ballenförmigen Behältnissen, bestehend aus einer untersten Lage, die eine im wesentlichen polygonale Fläche bedeckt und mindestens einer weiteren Lage von Behältnissen. Erfindungsgemäß ist diese Anordnung dadurch gekennzeichnet, dass an mindestens einer Ecke der untersten Lage ein Sperrkörper aus festem Material angeordnet ist. Wie bereits oben ausgeführt, dienen die Sperrkörper an den unteren Ecken dazu, den Stapel zu stabilisieren, und zwar nicht nur im Gleichgewichtszustand, sondern auch im Fall von Unfällen.

Auf diese Weise kann ein Positionierungs-System verwirklicht werden, durch das ausgehend von einem bestimmten Sperrkörper jedem Ballen eindeutige Koordinaten zugeordnet werden, die sich auf die Lage, die Reihe und die Position innerhalb der Reihe beziehen. Auf diese Weise ist ein vollständig transparentes Stoffstrommanagement verwirklichbar und es ist eine exakte Lagerbuchhaltung möglich. Damit können gesetzliche Vorgaben wie etwa in Zusammenhang mit einer befristeten Lagerung eingehalten und nachgewiesen werden.

Eine besonders begünstigte Form der erfindungsgemäßen Anordnung sieht vor, dass die Ballen in Abhängigkeit von ihrem Inhalt farblich gekennzeichnet sind. Dies erfolgt beispielsweise durch Verwendung unterschiedlich eingefärbter Folien in Abhängigkeit von der jeweiligen Materialgruppe, zu der der Inhalt des Ballens zuzuordnen ist. Längerfristig kann eine Normung der Farbenzuordnung erfolgen (werksintern oder generell im EU Binnenmarkt).

Dadurch ist es möglich, beispielsweise unterschiedlich zu entsorgende Materialien in einfacher Weise getrennt zu verwalten, ohne besondere logistische Maßnahmen treffen zu müssen. Die Materialien können gemeinsam in einem chaotischen System gelagert werden und dennoch jederzeit getrennt voneinander einer spezifischen Weiterverarbeitung zugeführt werden.

Weiters betrifft die vorliegende Erfindung einen Sperrkörper zur Herstellung einer Anordnung, wie sie oben beschrieben worden ist. Der Sperrkörper ist als Formkörper aus einem festen Material ausgebildet und besitzt mindestens eine ebene Auflagefläche. Dabei muss die Auflagefläche keineswegs durchgängig eben ausgebildet sein. Sie kann auch aus mehreren ebenen Abschnitten zusammengesetzt sein. Um eine ungestörte Auflagerung von Behältnissen zu ermöglichen, ist der obere Teil im Wesentlichen ballenförmig ausgebildet.

Die Manipulation mit fahrbaren Arbeitsgeräten kann dadurch sicherer gestaltet werden, dass eine Kante des Sperrkörpers mit einer Leiteinrichtung versehen ist. Dabei kann es sich um eine Leitschiene oder dergleichen handeln. Die Sicherheit kann weiter dadurch erhöht werden, dass an mindestens einem Abschnitt der Seitenwand Reflektoren und/oder Warnleuchten vorgesehen sind, so dass auch bei schlechten Sichtverhältnissen die Wahrnehmung entsprechend erleichtert wird. Zusätzlich oder alternativ kann an der Oberseite des Sperrkörpers ein Mast angebracht sein, der zur Anbringung von Bewegungsmeldern, Brandfrüherkennungssystemen und Beleuchtungseinrichtungen für das Betriebsgelände dient.

In einer besonders bevorzugten Ausführungsvariante der Erfindung ist der Sperrkörper im Wesentlichen einstückig aus Beton hergestellt. Alternativ ist es jedoch auch möglich, den Sperrkörper mit einer Außenhülle aus Kunststoff auszubilden, die mit einem schweren Füllmaterial, wie etwa Beton oder mit einem Schotter - Wassergemisch gefüllt ist.

Eine Erhöhung der Stabilität kann dadurch erreicht werden, dass eine Seitenfläche des Sperrkörpers mit einer konkaven Aufnahmefläche für einen Ballen versehen ist. Dadurch übernimmt der Sperrkörper zu seinem Eigengewicht auch noch das Gewicht des an der Aufnahmefläche anliegenden Ballens, sowie der darüber gestapelten Ballen in anteiliger Form. Auf diese Weise kann die Stabilität zusätzlich erhöht werden.

Die Form des Sperrkörpers kann dadurch optimiert werden, dass ein unterer Abschnitt aus einer ebenen Begrenzungsfläche, einer weiteren Begrenzungsfläche und einer abgerundeten Begrenzungsfläche besteht und dass an den unteren Abschnitt ein kuppelförmig-zylindrischer oberer Abschnitt anschließt. Auf diese Weise fügt sich der Sperrkörper optimal in den Stapel der ballenförmigen Behältnisse ein.

In der Folge wird die Erfindung anhand der in den Figuren dargestellten Ausführungsbeispiele näher erläutert. Es zeigen:
- Fig. 1: eine axonometrische Ansicht einer erfindungsgemäßen Anordnung;
- Fig. 2: ein Detail von Fig. 1 in seitlicher Ansicht; und
- Fig. 3: eine Draufsicht auf das Detail von Fig. 2.

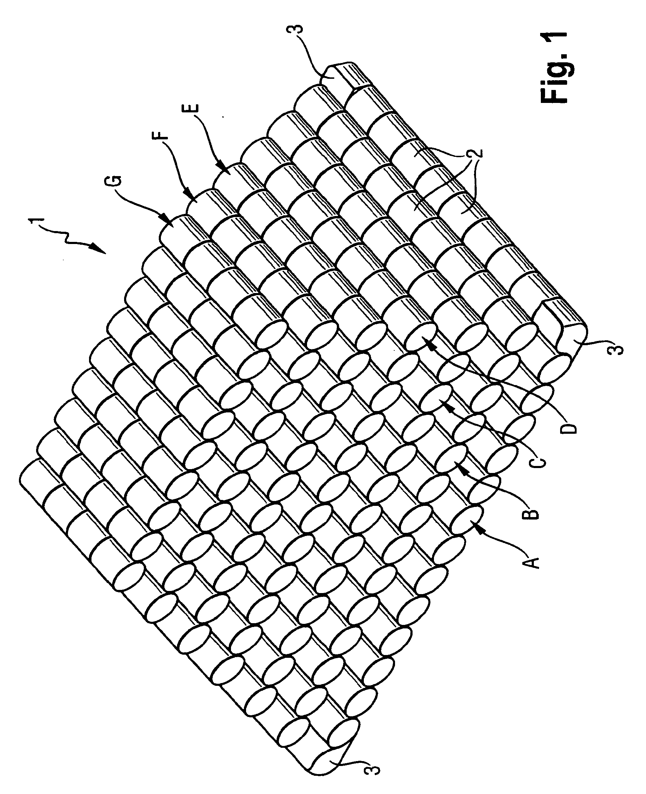

Fig. 1 zeigt eine Anordnung, die insgesamt mit 1 bezeichnet ist und aus übereinander gestapelten Ballen 2 besteht. Die im Wesentlichen zylindrisch ausgebildeten Ballen 2 sind in mehreren Lagen angeordnet, von denen die unterste Lage mit A und die darüber gestapelten Lagen mit B, C, D, E, F und G bezeichnet sind. An den vier Ecken der rechteckigen untersten Lage A ist jeweils ein Sperrkörper 3 zur Stabilisierung der Anordnung 1 angeordnet.

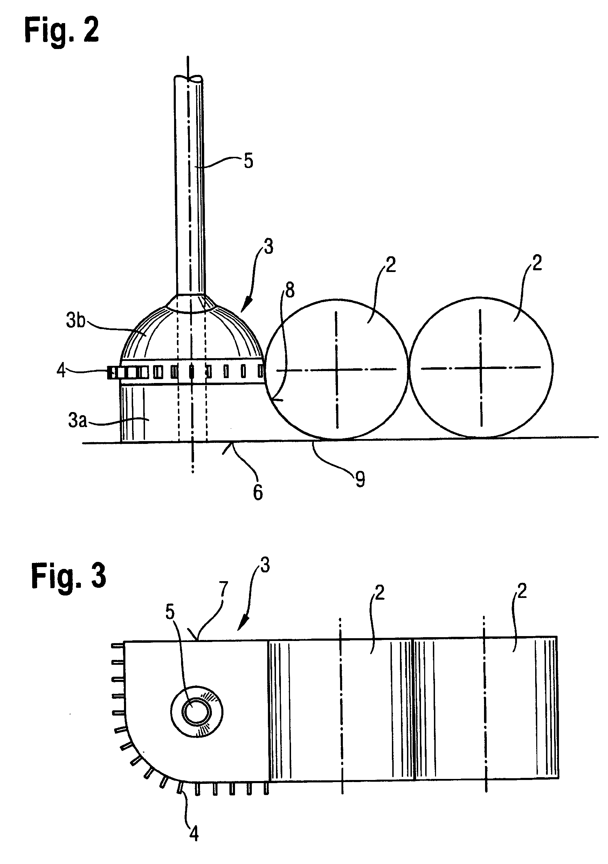

Fig. 2 und Fig. 3 zeigen den Bereich eines Sperrkörpers 3 in vergrößerter Ansicht im Detail. Der Sperrkörper 3 ist als Formkörper aus Beton ausgebildet und besteht aus einem unteren Abschnitt 3a und einem oberen Abschnitt 3b. Im mittleren Bereich sind Reflektoren 4 angeordnet, um die Sichtbarkeit entsprechend zu verbessern. An der höchsten Stelle des oberen Abschnitts 3b ist ein Mast 5 angeordnet, der Beleuchtungskörper, Bewegungsmelder und/oder Brandmelder tragen kann, die hier nicht dargestellt sind.

Der untere Abschnitt 3a weist an seiner Unterseite eine ebene Auflagefläche 6 auf, auf der der Sperrkörper 3 am Boden aufliegt. Weiters weist der untere Abschnitt 3a eine ebene Begrenzungsfläche 7 und eine Unterkante 9 auf, an die eine konkave Aufnahmefläche 8 für einen Ballen 2 anschließt. Der obere Abschnitt 3b besitzt im Wesentlichen eine Form wie der Oberteil eines Ballens 2.

Die vorliegende Erfindung ermöglicht es, die Sicherheit bei der Lagerung von Abfällen und ähnlichen Gütern wesentlich zu erhöhen.

## Patentansprüche

1. Verfahren zum Stapeln von ballenförmigen Behältnissen bzw. Ballen (2) in mindestens zwei übereinander geschichteten Lagen (A, B, C, D, E, F, G), wobei die unterste Lage (A) eine im wesentlichen polygonale Fläche bedeckt, **dadurch gekennzeichnet, dass** an mindestens einer Ecke der untersten Lage (A) ein Sperrkörper (3) aus festem Material angeordnet wird, der im Wesentlichen die gleichen Abmessungen aufweist wie die einzelnen Behältnisse.

2. Verfahren nach Anspruch 1, **dadurch gekennzeichnet, dass** die unterste Lage (A) rechteckig ausgelegt wird und dass an allen vier Ecken ein Sperrkörper (3) angeordnet wird.

3. Verfahren nach Anspruch 1 oder 2, **dadurch gekennzeichnet, dass** auf jeweils vier Behältnisse einer Lage (A, B, C, D, E, F, G) ein Behältnis einer weiteren Lage (A, B, C, D, E, F, G) gelegt wird.

4. Anordnung von ballenförmigen Behältnissen, bestehend aus einer untersten Lage (A), die eine im wesentlichen polygonale Fläche bedeckt und mindestens einer weiteren Lage (B, C, D, E, F, G) von Ballen (2), **dadurch gekennzeichnet, dass** an mindestens einer Ecke der untersten Lage (A) ein Sperrkörper (3) aus festem Material angeordnet ist, der Sperrkörper (3) im Wesentlichen die gleichen Abmessungen aufweist wie die einzelnen Behältnisse.

5. Anordnung nach Anspruch 4, **dadurch gekennzeichnet, dass** die unterste Lage (A) rechteckig ausgebildet ist und dass an allen vier Ecken der untersten Lage (A) ein Sperrkörper (3) angeordnet ist.

6. Anordnung nach Anspruch 4 oder 5, **dadurch gekennzeichnet, dass** auf jeweils vier Ballen (2) einer unteren Lage (A) mittig ein Behältnis einer oberen (B, C, D, E, F, G) Lage abgestützt ist.

7. Anordnung nach einem der Ansprüche 4 bis 6, **dadurch gekennzeichnet, dass** die einzelnen Behältnisse als Ballen (2) ausgebildet sind, die aus stückigem Material bestehen, das durch eine Hülle aus einer mehrlagig angebrachten Kunststofffolie, gegebenenfalls auf eine darunter angebrachte Netzumwicklung, zusammengehalten ist.

8. Anordnung nach einem der Ansprüche 4 bis 7, **dadurch gekennzeichnet, dass** die Ballen (2) in Abhängigkeit von ihrem Inhalt farblich gekennzeichnet sind.

9. Sperrkörper (3) zur Herstellung einer Anordnung nach einem der Ansprüche 4 bis 8, **dadurch gekennzeichnet, dass** er als Formkörper aus einem festen Material ausgebildet ist und mindestens eine ebene Auflagefläche (6) besitzt und dass der Oberteil im Wesentlichen ballenförmig ausgebildet ist.

10. Sperrkörper (3) nach Anspruch 9, **dadurch gekennzeichnet, dass** eine Kante mit einer Leiteinrichtung versehen ist.

11. Sperrkörper (3) nach einem der Ansprüche 9 bis 10, **dadurch gekennzeichnet, dass** an einem Abschnitt der Seitenwand Reflektoren (4) und/oder Warnleuchten vorgesehen sind.

12. Sperrkörper (3) nach einem der Ansprüche 9 bis 11, **dadurch gekennzeichnet, dass** an der Oberseite ein Mast (5) angebracht ist.

13. Sperrkörper (3) nach einem der Ansprüche 9 bis 12, **dadurch gekennzeichnet, dass** er im Wesentlichen einstückig aus Beton hergestellt ist.

14. Sperrkörper (3) nach einem der Ansprüche 9 bis 12, **dadurch gekennzeichnet, dass** eine vorzugsweise aus Kunststoff bestehende Außenhülle vorgesehen ist, die mit einem schweren Füllmaterial, vorzugsweise Beton oder Beton-Wassergemisch, gefüllt ist.

15. Sperrkörper (3) nach einem der Ansprüche 9 bis 14, **dadurch gekennzeichnet, dass** im Bereich einer Unterkante (9) eine konkave Aufnahmefläche (7) für einen Ballen (2) vorgesehen ist.

16. Sperrkörper (3) nach einem der Ansprüche 9 bis 15, **dadurch gekennzeichnet, dass** ein unterer Abschnitt (3a) aus einer ebenen Begrenzungsfläche (8), einer weiteren Begrenzungsfläche (8) und einer abgerundeten Begrenzungsfläche (8) besteht und dass an den unteren Abschnitt (3a) ein kuppelförmig-zylindrischer oberer Abschnitt (3b) anschließt.

## Claims

1. Method for stacking bag-type containers or bales (2) in at least two superimposed layers (A, B, C, D, E, F, G), where the bottom layer (A) covers an essentially polygonal area, **characterised in that** on at least one corner of the bottom layer (A) a blocking body (3) made of solid material is provided which essentially has the same dimensions as the individual containers.

2. Method according to claim 1, **characterised in that** the bottom layer (A) is rectangular and that blocking bodies (3) are provided on all four corners.

3. Method according to claim 1 or 2, **characterised in that** on every four containers of one layer (A, B, C, D, E, F, G) one container of a further layer (A, B, C, D, E, F, G) is placed.

4. Arrangement of bag-type containers, consisting of a bottom layer (A) covering an essentially polygonal area and at least one further layer (B, C, D, E, F, G) of bales (2), **characterised in that** a blocking body (3) of solid material is disposed on at least one corner of the bottom layer (A) and that said blocking body (3) has essentially the same dimensions as the individual containers.

5. Arrangement according to claim 4, **characterised in that** the bottom layer (A) is rectangular and that blocking bodies (3) are provided on all four corners of the bottom layer (A).

6. Arrangement according to claim 4 or 5, **characterised in that** each bale of an upper layer (B, C, D, E, F, G) is centrally placed on four supporting bales (2) of a lower layer (A).

7. Arrangement according to any of claims 4 to 6, **characterised in that** the individual containers are configured as bales (2) comprising pieces of material which is held together by a hull of multilayer plastic sheeting, with possibly an envelopping net underneath the plastic hull.

8. Arrangement according to any of claims 4 to 7, **characterised in that** the bales (2) are coloured, the colour identifying their contents.

9. Blocking body (3) used in an arrangement according to any of claims 4 to 8, **characterised in that** said blocking body (3) is configured as a formed body made of solid material, which has at least one plane bottom surface (6) while its upper part is essentially bale-shaped.

10. Blocking body (3) according to claim 9, **characterised in that** one edge is provided with a guiding device.

11. Blocking body (3) according to claim 9 or 10, **characterised in that** reflectors (4) and/or warning lights are provided on an area of the side wall.

12. Blocking body (3) according to any of claims 9 to 11, **characterised in that** a pole (5) is provided on the top side.

13. Blocking body (3) according to any of claims 9 to 12, **characterised in that** it is made of concrete essentially in one piece.

14. Blocking body (3) according to any of claims 9 to 12, **characterised in that** an outer hull is provided, which is preferably made of plastic material and which is filled with a heavy filling material, preferably concrete or a mixture of concrete and water.

15. Blocking body (3) according to any of claims 9 to 14, **characterised in that** in the area of a bottom edge (9) a concave receiving surface (7) for a bale (2) is provided.

16. Blocking body (3) according to any of claims 9 to 15, **characterised in that** a lower section (3a) comprises a plane boundary surface (8), a further boundary surface (8) and a rounded-off boundary surface (8), and that a cylindrical dome-shaped upper section (3b) is joined to the lower section (3a).

## Revendications

1. Procédé pour empiler des conteneurs en forme de balle ou des balles (2) dans au moins deux couches superposées (A, B, C, D, E, F, G),
- la couche inférieure (A) couvrant une surface pratiquement polygonale,
procédé **caractérisé en ce qu'**
à au moins un coin de la couche inférieure (A), on installe un organe de blocage (3) en un matériau solide et ayant pratiquement les mêmes dimensions que celles d'un conteneur.

2. Procédé selon la revendication 1,
**caractérisé en ce que**
la couche inférieure (A) est de forme rectangulaire et aux quatre coins, on installe un organe de blocage (3).

3. Procédé selon la revendication 1 ou 2,
**caractérisé en ce que**
sur chaque fois quatre conteneurs de la première couche (A, B, C, D, E, F, G), on place un conteneur d'une autre couche (A, B, C, D, E, F, G).

4. Disposition de conteneurs en forme de balle composée d'une couche inférieure (A) couvrant une surface pratiquement polygonale et au moins une autre couche (B, C, D, E, F, G) de balles (2),
disposition **caractérisée en ce qu'**
à au moins un coin de la couche inférieure (A), on a un organe de blocage (3) en un matériau solide ayant pratiquement les mêmes dimensions que celles d'un conteneur.

5. Disposition selon la revendication 4,
**caractérisée en ce que**
la couche inférieure (A) est de forme rectangulaire et aux quatre coins de la couche inférieure (A), il y a un organe de blocage (3).

6. Disposition selon l'une des revendications 4 à 5,
**caractérisée en ce que**
un conteneur d'une couche supérieure (B, C, D, E, F, G) s'appuie au milieu de chaque fois quatre balles (2) de la couche inférieure (A).

7. Disposition selon l'une des revendications 4 à 6,
**caractérisée en ce que**
les différents conteneurs sont des balles (2) en un matériau en forme de morceaux maintenus réunis par une enveloppe constituée par un film de matière plastique à plusieurs couches, le cas échéant sur une enveloppe en forme de filet placée en dessous.

8. Disposition selon l'une des revendications 4 à 7,
**caractérisée en ce que**
les balles (2) sont **caractérisées par** des couleurs en fonction de leur contenu.

9. Organe de blocage (3) pour réaliser une disposition selon l'une des revendications 4 à 8,
**caractérisé en ce qu'**
il est réalisé comme corps mis en forme en une matière rigide et à au moins une surface d'appui (6) plane et la partie supérieure est pratiquement en forme de balle.

10. Organe de blocage (3) selon la revendication 9,
**caractérisé en ce qu'**
une arête est munie d'une installation de guidage.

11. Organe de blocage (3) selon l'une des revendications 9 à 10,
**caractérisé en ce qu'**
un segment de la paroi latérale comporte des réflecteurs (4) et/ou des voyants de signalisation.

12. Organe de blocage (3) selon l'une des revendications 9 à 11,
**caractérisé en ce que**
le côté supérieur est muni d'un mât (5).

13. Organe de blocage (3) selon l'une des revendications 9 à 12,
**caractérisé en ce qu'**
il est réalisé pratiquement en une seule pièce en béton.

14. Organe de blocage (3) selon l'une des revendications 9 à 12,
**caractérisé par**
une enveloppe extérieure, de préférence en matière plastique, remplie d'une matière de remplissage plus lourde, de préférence en béton ou en un mélange de béton et d'eau.

15. Organe de blocage (3) selon l'une des revendications 9 à 14,
**caractérisé en ce que**
la région de l'arête inférieure (9), une surface de réception concave (7) pour une balle (2).

16. Organe de blocage (3) selon l'une des revendications 9 à 15,
**caractérisé en ce que**
le segment inférieur (3a) est composé d'une surface (8) plane, d'une autre surface limite (8) et d'une surface limite (8) arrondie et le segment inférieur (3a) se poursuit par un segment supérieur (3b) cylindrique en forme de coupole.
